# EUROPÄISCHE PATENTSCHRIFT

(11) **EP 1 254 403 B1**
(45) Veröffentlichungstag und Bekanntmachung des Hinweises auf die Patenterteilung: **02.11.2006**
(21) Anmeldenummer: 01901189.9
(22) Anmeldetag: 23.01.2001
(51) Int. Cl.: G05D 16/20

(54) **VERFAHREN ZUR STEUERUNG EINES PROPORTIONAL-MAGNETEN MIT HALTEFUNKTION**
METHOD FOR CONTROL OF A PROPORTIONAL MAGNET WITH A HOLD FUNCTION
PROCEDE DE COMMANDE D'UN AIMANT PROPORTIONNEL AVEC FONCTION DE MAINTIEN

(30) Priorität: 29.01.2000 DE 10003896
(43) Veröffentlichungstag der Anmeldung: 06.11.2002
(73) Patentinhaber: ZF FRIEDRICHSHAFEN Aktiengesellschaft, 88038 Friedrichshafen (DE)
(72) Erfinder: MAYR, Karlheinz, 88142 Wasserburg (DE); EISELE, Markus, 88048 Friedrichshafen (DE); INGENBLEEK, Robert, 88079 Kressbronn (DE); KILL, Walter, 88046 Friedrichshafen (DE); REMMLINGER, Hubert, 88046 Friedrichshafen (DE); FISCHER, Jochen, 88046 Friedrichshafen (DE); FESSLER, Bernd, 88079 Kressbronn (DE)
(86) Internationale Anmeldenummer: PCT/EP2001/000678
(87) Internationale Veröffentlichungsnummer: WO 2001/055807

(56) Entgegenhaltungen:
- EP-A- 0 233 166
- DE-A- 3 506 053
- DE-A- 3 829 686
- DE-A- 3 905 937
- DE-C- 357 964

## Beschreibung

Die Erfindung betrifft ein Verfahren zur Steuerung eines Proportional-Magneten mit einem Magnetkern, einem Magnetanker, einer Magnetspule, zur Betätigung eines Steuerelements in einem Schaltventil oder einem Proportional-Druckregelventil und einer elektronischen Steuervorrichtung. Insbesondere betrifft die Erfindung ein Verfahren zur Steuerung eines Proportional-Magneten in einem Proportional-Druckregelventil für die Kupplungsbetätigung in einem automatischen Kraftfahrzeuggetriebe, wobei der Magnetanker zwischen einem Regelbereich und einem Haltebereich mit einer magnetischen Halteposition des Magnetankers hin und her bewegbar ist und ein definierter Übergang vom Regelbereich in die Halteposition ausführbar ist wobei man die Bewegung des Magnetankers, insbesondere das Lösen aus der Halteposition detektiert und der Magnetanker Kontrolliert aus der Halteposition in den Regelbereich überführt wird.

Die Erfindung betrifft ferner einen Proportional-Magneten zur Durchführung des Verfahrens sowie ein Proportional-Druckregelventil, welches einen vorgenannten Proportional-Magneten enthält.

Ein Proportional-Magnet in der vorgenannten Bauweise für den Einsatz in einem Proportional-Druckregelventil ist beispielsweise aus der DE 199 04 901 der Anmelderin bekannt. In dieser Schrift ist ein Ventil beschrieben, welches als Vorsteuerventil zum Ansteuern von Kupplungen in automatischen Kraftfahrzeug-Schaltgetrieben verwendet wird (CE-Druckregler).

Ein ähnliches Proportional-Druckregelventil, welches ebenfalls einen Proportional-Magnet der oben genannten Bauart enthält, ist aus der DE 199 04 902 der Anmelderin bekannt. Dieses Dokument betrifft insbesondere Ventile, welche als Direktsteuerventile zum Ansteuern von Kupplungen in automatischen Kraftfahrzeug-Schaitgetrieben verwendet werden (ZF-Druckregler).

In der DE 38 29 686 A1 wird weiterhin ein Druckregelventil mit Proportional-Magneten vorgestellt, wobei der Magnetanker zwischen einem Regelbereich und einem Haltebereich hin- und herbewegbar ist. Der Magnetanker kann nicht kontrolliert aus der Halteposition in den Regelbereich überführt werden.

In der DE 39 05 937 A1 wird eine Vorrichtung und ein Verfahren zur Ansteuerung eines Magnetventils vorgeschlagen, wobei der durch das Magnetventil fließende Strom erfaßt wird. Weiterhin wird der durch die Spule des Magnetventils fließende Strom geregelt. Mit einem festgelegten maximalen Strom wird das Magnetventil sicher angezogen. Anschließend wrid der Strom auf einen Wert, einen sogenannten Haltestrom, reduziert.

In den vorgenannten Anmeldungen sind somit entweder Proportional-oder Haltemagnete bzw. Schaltmagnete beschrieben, welche einen definierten Übergang vom Regelbereich in einen Haltebereich bzw. in eine magnetische Halteposition realisieren. Dieser definierte Übergang wird gemäß dem Stand der Technik dadurch erreicht, daß durch die an sich bekannte Magnet-Charakteristik mit großen Magnetkräften bei geringen Luftspalten zwischen dem Magnetanker und dem Magnetkern und durch eine entsprechende Magnetauslegung ein Spulenstrom bzw, ein "Schnappstrom" eingestellt werden kann, bei welchem der Regelbereich des Magneten schnell überfahren wird, d. h., daß der Magnetanker aus dem Regelbereich in die Halteposition "schnappt" und der Magnetanker im Bereich der hohen Magnetkraft in der Halteposition gehalten wird.

Eine Bewegung in entgegengesetzter Richtung, nämlich das Lösen des Proportional-Magneten aus dem Haltebereich bzw. der Halteposition und der Übergang in den Regelbereich, war gemäß dem Stand der Technik bislang nicht in befriedigender Weise kontrollierbar.

Aufgabe der vorliegenden Erfindung ist es daher, ein Verfahren anzugeben, welches die Bewegungen des Magnetankers erkennt und somit zum definierten Abschalten des Proportional-Magneten bzw. zum Lösen eines mit diesem verbundenen Steuerelements eines Schalt- oder Proportional-Druckregelventils aus der Halteposition einsetzbar ist, um somit einen definierten Übergang von dem Haltebereich, insbesondere der Halteposition, in den Regelbereich zu realisieren. Es ist weiterhin eine Aufgabe der vorwiegenden Erfindung, einen Proportional-Magnet zur Durchführung des Verfahrens sowie ein Proportional-Druckregelventil anzugeben, welches einen derartigen Proportional-Magneten enthält.

Die Lösung dieser Aufgabe erfolgt mit einem Verfahren, einem Proportional-Magnet sowie mit einem Proportional-Druckregelventil mit den in den Ansprüchen 1, 17 und 24 angegebenen Merkmalen.

Erfindungsgemäß sind für das Verfahren zur Steuerung eines Proportional-Magneten Mittel vorgesehen, welche die Bewegungen des Magnetankers erkennen. Hiermit wird ein Verfahren vorgeschlagen, welches vorteilhafterweise jede Bewegung des Magnetankers in einem Proportional-Magneten detektierbar macht. Somit kann sowohl eine Bewegung des Magnetankers von dem Regelbereich in die Halteposition als auch eine Bewegung in umgekehrter Richtung erkannt werden.

Die Erfindung basiert auf dem folgenden physikalischen Effekt, daß nämlich einerseits die Haltefunktion des Magnetankers in dem Bereich hoher Magnetkräfte und kleiner Luftspalte im Elektromagneten erfolgt; dieser Bereich ist elektrisch durch eine erhöhte Induktivität gekennzeichnet. Andererseits induziert das Lösen des Magnetankers von dem Magnetkern eine Spannung, welche über den Spulenwiderstand unmittelbar den Spulenstrom beeinflußt.

Da insbesondere bei einem Proportional-Druckregelventil die Bewegungen des Magnetankers im wesentlichen den Bewegungen eines Steuerelements des Ventils entsprechen, werden mit dem erfindungsgemäßen Verfahren vorteilhafterweise mehrere Anwendungen zur Steuerung eines Proportional-Magneten ermöglicht, welche im folgenden beschrieben sind.

Gemäß der Erfindung wird der Spulenstrom nun als direktes Meßsignal in der elektrischen Steuervorrichtung zur Verfügung gestellt, so daß ohne zusätzliche Sensorik die Wegänderung des Magnetankers erkannt werden kann. Die Detektion der Bewegung des Magnetankers ist somit vorteilhafterweise unabängig von Bauteiltoleranzen und/oder Umgebungsbedingungen.

Erfindungsgemäß wird vorgeschlagen, daß die Mittel das Lösen des Magnetankers aus der Halteposition erkennen und der Magnetanker mittels der elektronischen Steuervorrichtung kontrolliert aus der Halteposition in den Regelbereich überführt wird. Dies erfolgt dadurch, daß der Zeitpunkt, in dem das Ablösen des Magnetankers von dem Magnetkern stattfindet, durch einen Anstieg des Spulenstroms von der elektronischen Steuervorrichtung erkannt wird. Die danach einsetzende Stromkorrektur fängt den Magnetanker während seines Ablösevorgangs von dem Magnetkern ab, d. h., daß der Magnetanker unmittelbar nach dem Lösen von dem Magnetkern aus der Halteposition durch die einsetzende Stromkorrektur kontrolliert in den Regelbereich des Proportional-Magneten überführt wird, bevor der durch das Proportional-Druckregelventil zu steuernde hydraulische Druck einbricht.

Selbstverständlich wird durch die erfindungsgemäßen Mittel auch ein Durchschalten des Magnetankers vom Regelbereich in die Halteposition erkannt, indem ein zugehöriger Duchschnapp-Grenzstrom detektiert wird, welcher wiederum zur Berechnung des Abfangstroms verwendet wird.

Vorteilhafterweise kann somit auch auf elektronischem Weg ein unbeabsichtigtes Durchschalten des Magnetankers, beispielsweise bei einem Hauptdruckeinbruch, vom Regel- in den Haltebereich erkannt und Gegenmaßnahmen eingeleitet werden.

In einer weiteren Ausbildung des Steuerverfahrens wird vorgeschlagen, daß in der elektronischen Getriebesteuerung eine Strom-Schwellwertvorgabe I_Schwell abspeicherbar ist, so daß beim Überschreiten dieser Vorgabe durch den Spulenstrom vorteilhafterweise der Zeitpunkt des Lösens des Magnetankers von dem Magnetkern feststellbar ist.

Da der Spulenstrom üblicherweise geregelt wird, wirkt somit der Stromregler dem erfindungsgemäßen Effekt eigentlich entgegen, das bedeutet, daß der Strom-Sollwert I_Soll zur Auslösung der Abschaltfunktion derart zu wählen ist, daß der Regler in seiner unteren Stellgrößenbeschränkung bleibt. Dies entspricht de facto einem Abschalten des Reglers, da der durch das Lösen des Magnetankers induzierte Stromanstieg kein weiteres Abregeln bewirkt. Erfindungsgemäß erfolgt nach dem Lösen des Magnetankers von dem Magnetkern eine geeignete Strom-Sollwertvorgabe, wobei dies vorteilhafterweise geschieht, bevor der von dem Proportional-Druckregelventil zu steuernde Druck einbricht, d. h., daß der Regeldruck auf einen Wert unterhalb des Kupplungsschließdruckes fällt.

Das Proportionalventil ist mit einem Schieberventilkörper ausgebildet, welcher vorteilhafterweise eine derartige geometrische Auslegung der Überdeckungsverhältnisse seiner Steuerkanten aufweist, so daß mittels des erfindungsgemäßen Verfahrens das Lösen des Magnetankers bereits festgestellt wird, und die kontrollierte Führung in den Regelbereich beginnt, bevor die Bewegung des Magnetankers bzw. des Ventilkörpers eine hydraulische Wirkung erzeugt.

Für ein Verfahren zur Steuerung eines Proportional-Druckregelventils mit einem Sitzventilkörper ist dieses für Getriebeanwendungen derart auszulegen, daß die beim Lösen des Ankers auftretende Druckänderung vorteilhafterweise oberhalb des Kupplungshaltedrucks liegt.

Zur Detektion der Bewegungen des Magnetankers sind prinzipiell verschiedene Realisierungsmöglichkeiten einsetzbar, die sich in Hardware- oder Software-Realisierungen sowie auch in Online- und Offline-Verfahren unterteilen lassen.

Zur Hardware-Realisierung des erfindungsgemäßen Verfahrens wird vorgeschlagen, daß die Detektion vorteilhafterweise mittels eines ASIC (Application Specific Integrated Circuit) erfolgt.

In einer vorteilhaften Weiterbildung wird vorgeschlagen, daß einzelne Spitzenwerte des Spulenstroms detektiert werden und daß beim Lösen des Magnetankers der Spulenstrom sofort wieder auf einen Sollwert angehoben wird, der die Schaltelemente, beispielsweise die Kupplung in einem Getriebe, auf einem sicheren Schließdruck hält.

Beim Lösen des Magnetankers von dem Magnetkern wird ein binäres Signal an die elektronische Steuervorrichtung, insbesondere die elektronische Getriebesteuerung, gegeben. Danach erfolgt durch die Steuervorrichtung eine geeignete, beispielsweise eine adaptive Vorgabe eines Strom-Sollwerts.

Nach einer weiteren vorteilhaften Ausbildung des Verfahrens erfolgt eine Software-Realisierung der Detektion der Bewegung des Magnetankers mittels einer modellbasierten Detektion. Dabei wird durch eine Differenz zwischen dem gemessenen Spulenstrom und einem mittels eines linearen Begleitmodells berechneten, simulierten Strom das Lösen des Magnetankers detektiert.

Alternativ erfolgt eine Software-Realisierung mittels einer beobachterbasierten Detektion der Ankergeschwindigkeit. Dabei wird der nichtlineare Anteil der Bewegungsgleichung des Spulenstroms als Störgröße erfaßt und somit der Zeitpunkt des Lösens des Magnetankers erkannt.

Die beobachterbasierte Detektion gibt außerdem einen Schätzwert der Ankergeschwindigkeit an, welcher in einem überlagerten Regelkreis mit einer Stellgrößenbeschränkung zum "Abfangen" des Magnetankers, insbesondere bei einer Online-Realisierung, nutzbar ist.

Der maximale Spulenstrom, welcher eine Stellgröße des Geschwindigkeitsreglers darstellt, wird dabei auf den Proportionalbereich, d. h. den Regelbereich, des Magneten beschränkt, damit der Magnetanker nicht wieder in die Halteposition zurückschnappt.

Alternativ zu den vorgenannten Online-Verfahren ist eine Software-Realisierung für das erfindungsgemäße Verfahren vorteilhafterweise auch in einem der nachfolgenden Offline-Verfahren einsetzbar.

So können beispielsweise die charakteristischen Parameter des Proportional-Magneten, wie z. B. das Zeitverhalten des Abschaltvorgangs oder die Stromschwellwerte, wie insbesondere der Durchschnapp-Grenzstrom oder die Stromamplituden der Gegeninduktion, am Produktionsbandende nach Fertigstellung des Magneten bzw. des Proportional-Druckregelventils, einmal ermittelt und in der zugehörigen elektronischen Steuervorrichtung, insbesondere der elektronischen Getriebesteuerung, eingespeichert werden.

Alternativ hierzu kann jedoch auch bei jedem Motorstart eines mit einem erfindungsgemäßen Proportional-Magnet ausgestatteten Kraftfahrzeugs der Proportional-Magnet getestet werden, indem die Zeitspanne zwischen einem Spannungssignal und einem Stromanstieg ausgewertet wird. Dies ist besonders vorteilhaft, da sich diese charakteristischen Größen während der Lebensdauer eines Kraftfahrzeugs verändern.

Die vorgenannten Ausbildungen und Vorteile des erfindungsgemäßen Verfahrens zur Steuerung eines Proportional-Magneten sind sinngemäß auch auf einen Proportional-Magneten selbst, welcher zur Durchführung des vorerwähnten Verfahrens verwendet wird, anwendbar.

Vorteilhafterweise sind der Proportional-Magnet, der Detektor und die Auslegung der Abschaltfunktion und der Stromregler sowie auch konstruktive Parameter des hydraulischen Teilsystems und der Elektronik als mechatronisches Gesamtsystem aufeinander abgestimmt.

In einer vorteilhaften Weiterbildung der Erfindung wird ferner vorgeschlagen, ein Proportional-Druckregelventil mit einem Proportional-Magneten der vorbeschriebenen Art auszustatten. Dabei ist das Druckregelventil mit einem Schieberventilkörper ausgebildet und dieser weist eine derartige geometrische Auslegung des Überdeckungsverhältnisses seiner Steuerkanten auf, so daß das Lösen des Magnetankers bereits festgestellt wird und die kontrollierte Führung in den Regelbereich beginnt, noch bevor die Bewegung des Magnetankers bzw. des Steuerelements eine hydraulische Wirkung erzeugt.

In einer alternativen Ausbildung des Proportional-Druckregelventils ist dieses mit einem Sitzventilkörper ausgestattet, der wiederum geometrisch derart ausgelegt ist, daß der sich nach dem Lösen des Ankers einstellende hydraulische Druck größer ist als der Kupplungshaltedruck.

Weitere Ziele, Vorteile und Ausgestaltungen der Erfindung ergeben sich aus der nachfolgenden Beschreibung der Ausführungsbeispiele, die in den Figuren näher dargestellt sind.

Es zeigen:
- Fig. 1: eine Magnetkraft-/Wegkennlinie mit Regel-und Haltebereich;
- Fig. 2: die Induktivitäts-Kennlinie in Abhängigkeit vom Luftspalt;
- Fig. 3: den Verlauf des Regeldrucks und des Spulenstroms während eines Abschaltvorgangs in Abhängigkeit der Zeit als Meßdiagramm;
- Fig. 4: die Verläufe von Spannung, Strom, Druck und
- bis 6: Weg während eines Abschaltvorgangs als Funktion der Zeit;
- Fig. 7: die Verläufe von hydraulischem Hauptdruck, Regeldruck und Regelstrom als Funktion der Zeit für den Übergang vom Regel- in den Haltebereich;
- Fig. 8: die Verläufe gemäß Fig. 7 bei einem Hauptdruckeinbruch;
- Fig. 9: einen Modellfolge-Detektor in schematischer Darstellung;
- Fig. 10: einen Störgrößenbeobachter in schematischer Darstellung und
- Fig. 11: ein 3/2-Wege-Proportional-Druckregelventil mit magnetischer Haltefunktion des Magnetankers in CE-(Closed-End-)Ausführung im Längsschnitt.

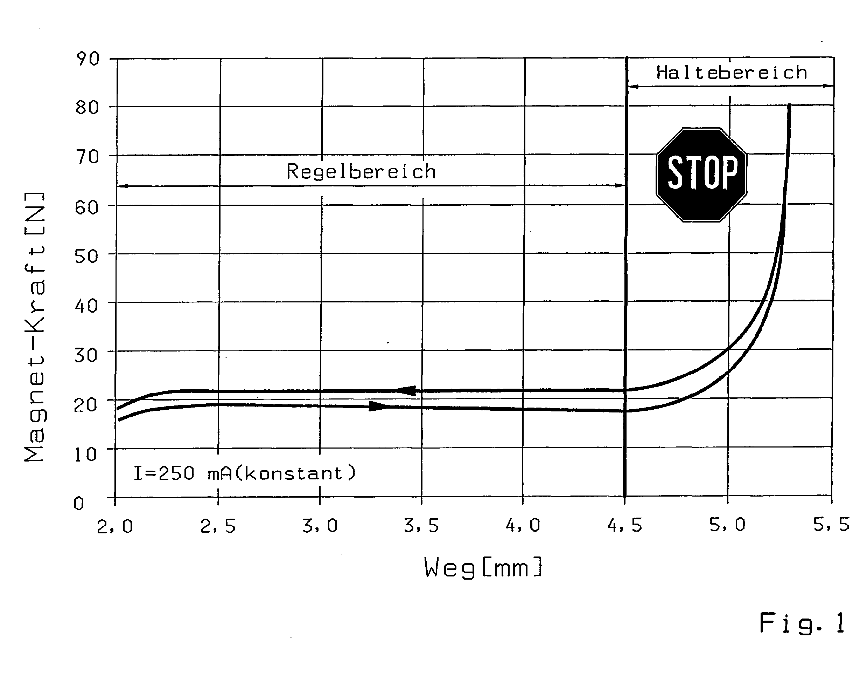

Der Weg eines Magnetankers (Fig. 1) in einem Proportional-Druckregelventil ist im wesentlichen in einen Regelbereich sowie einen Haltebereich unterteilbar, wobei die größte zurücklegbare Wegstrecke von beispielsweise ca. 5,3 mm der Endposition des Magnetankers an dem Magnetkern entspricht. Der Bereich von ca. 2 bis 4,5 mm wird als Regelbereich des Magneten bezeichnet. Bei einem konstanten Spulenstrom von beispielsweise 250 mA liegt die Magnetkraft im Regelbereich bei einem konstanten Wert um ca. 20 N. In dem Haltebereich oberhalb 4,5 mm Weg des Magnetankers steigt die Magnetkraft bis zur Anschlag- bzw. Halteposition überproportional an. Die Magnetkraft selbst folgt einem Hystereseverlauf, so daß ein Schließen und Öffnen des Magneten in etwa auf derselben Kurve verläuft.

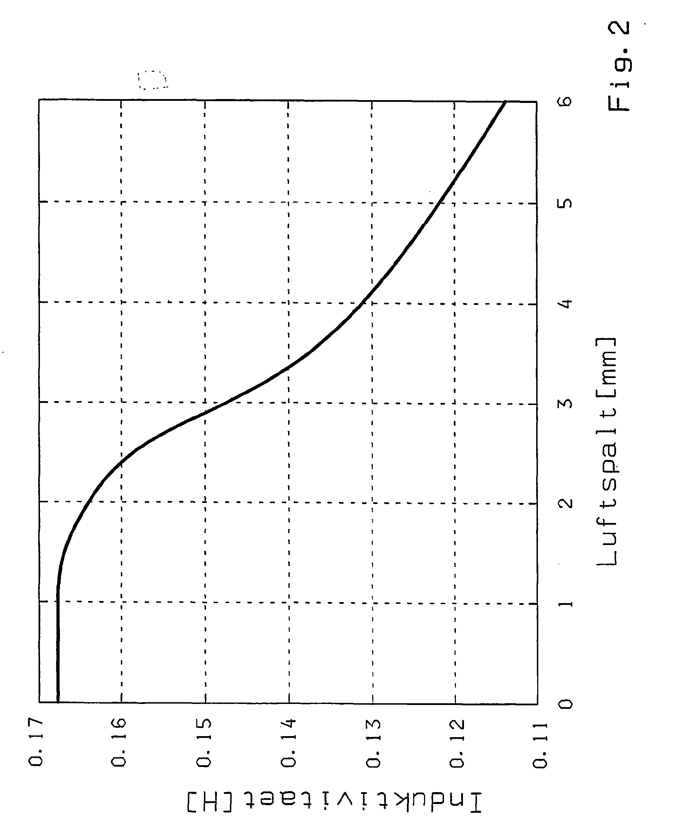

Umgekehrt proportional zum Weg des Magnetankers nach Fig. 1 stellt sich ein Luftspalt (Fig. 2) zwischen der Stirnseite des Magnetankers und dem Magnetkern ein, d. h., der Bereich kleiner Luftspalte ist elektrisch durch eine erhöhte Induktivität gekennzeichnet, welche sich mit zunehmendem Luftspalt, also mit dem Lösen des Ankers, reduziert. Das Lösen des Ankers induziert dann eine zeitabhängige Spannung, welche über den Spulenwiderstand unmittelbar den Spulenstrom beeinflußt.

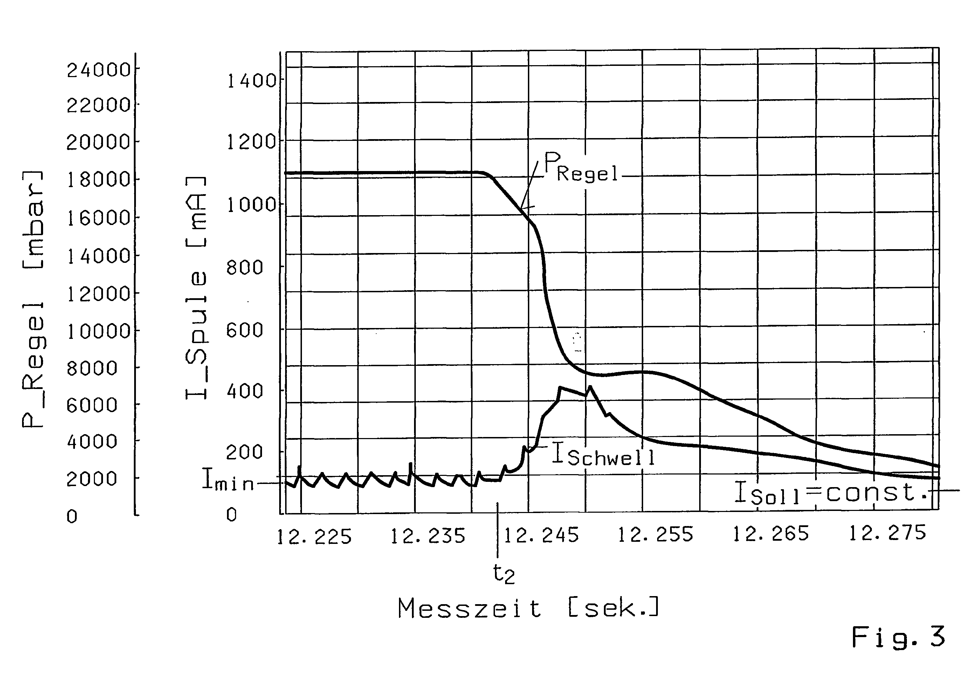

Der Spulenstrom I_Spule verhält sich proportional zum Regeldruck P_Regel und wird in der elektronischen Steuervorrichtung direkt als Meßsignal zur Verfügung gestellt, so daß ohne zusätzliche Sensorik die Wegänderung des Ankers gemäß Fig. 1 erkannt werden kann. Zu Beginn eines Abschaltvorgangs (Fig. 3) wird der Spulenstrom von einem nicht gezeigten Maximalwert auf einen Minimalwert I_min reduziert, welcher bis zum Zeitpunkt t_2 durch eine pulsweiten-modulierte Spulenspannung U_Spule erzeugt wird. In dem dargestellten modulierten Verlauf von I_Spule erfolgen in 10 msec fünf Perioden, so daß dies in diesem Beispiel einer Frequenz von 500 Hz entspricht. Während dieses Zeitraums bis zum Erreichen von t_2 verläuft der Regeldruck P_Regel konstant auf einem Wert von ca. 18 bar. Der Stromregler befindet sich in seiner unteren Stellgrößenbeschränkung, so daß dieser die Stellgröße nicht weiter zurücknehmen kann. Dies ist notwendig, damit ein durch Gegeninduktion verursachter Stromanstieg, der detektiert werden soll, nicht durch den Regler abgeschwächt wird. Die Bewegung des Ankers beim Abfallen des Magneten ist erfindungsgemäß durch einen Anstieg des Spulenstroms infolge der nach dem Zeitpunkt t_2 einsetzenden Gegeninduktion erkennbar. Mit dem vorgeschlagenen Detektor wird diese Stromüberhöhung abhängig von einem frei programmierbaren Schwellstrom I_Schwell erkannt, wodurch wiederum das eigentliche - hier nicht dargestellte - Abfangen ausgelöst wird. Nach der Detektion des Schwellwertes wird der Spulenstrom auf einen konstanten Sollwert I_Soll zurückgenommen.

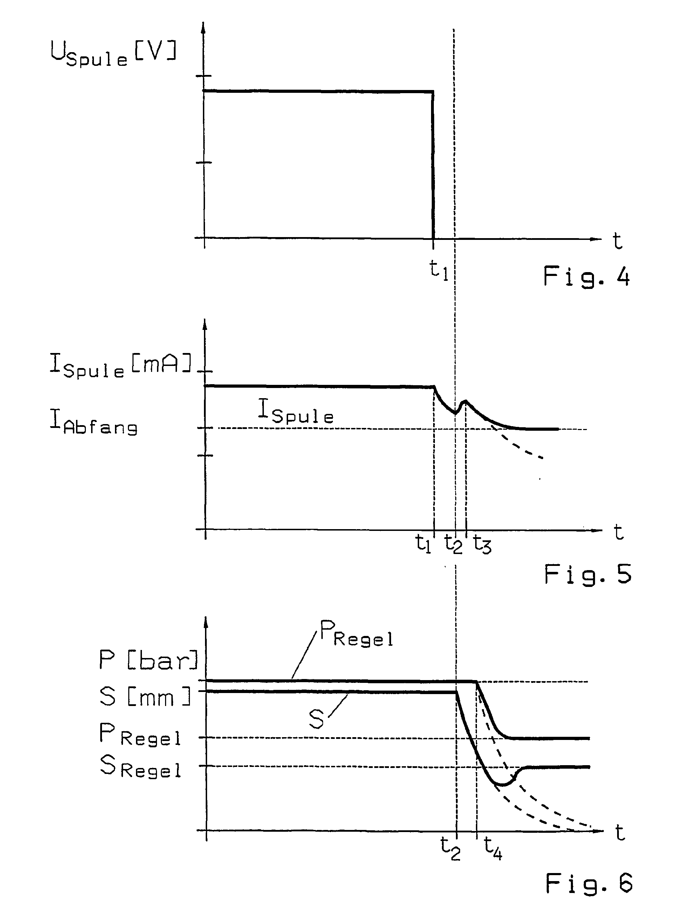

In einem typischen Abschaltvorgang eines Proportional-Magneten (Fig. 4 bis 6) wird die zunächst konstante Spulenspannung U_Spule zum Zeitpunkt t_1 abgeschaltet. Zum selben Zeitpunkt t_1 (Fig. 5) beginnt auch die Reduktion des Spulenstroms I_Spule bis zum Zeitpunkt t_2. In t_2 setzt die Gegeninduktion ein, so daß der Spulenstrom kurzzeitig überhöht wird bis zum Zeitpunkt t_3. Anschließend wird der Spulenstrom gemäß der Erfindung auf einem Wert I_Abfang abgefangen. Ohne die erfindungsgemäße Abfangfunktion würde der Spulenstrom auf einen Wert kleiner I_Abfang (gestrichelte Linie) fallen.

Der Ankerweg s (Fig. 6) bleibt bis zum Erreichen des Zeitpunkts t_2 konstant, d. h., daß der Anker sich auch nicht bewegt. Nach Erreichen von t_2, zu dem die Abfangfunktion einsetzt, beginnt der Anker sich aus seiner Position zu lösen, was durch den Abfall des Verlaufs des Ankerwegs S nach t_2 erkennbar ist. Durch die Abfangfunktion wird der Anker bei einem Wert S_Regel eingefangen, der anschließend konstant gehalten wird. Ohne den erfindungsgemäßen Eingriff in den Spulenstrom jedoch würde der Verlauf des Ankerwegs S entlang der gestrichelten Linie erfolgen.

Der hydraulische Regeldruck P_Regel des Proportional-Druckregelventils liegt zunächst auf einem konstanten Wert von beispielsweise 18 bar. Erst nachdem der Anker einen definierten Weg zurückgelegt hat, beispielsweise zum Zeitpunkt t_4, beginnt auch der Druckeinbruch. Ohne einen Eingriff in die Druckregelung würde der hydraulische Regeldruck P_Regel in etwa in einem Verlauf entlang der gestrichelten Linie abfallen. Durch einen Eingriff in den Spulenstrom jedoch wird der Regeldruck somit auf einem Wert oberhalb von z. B. 12 bar abgefangen.

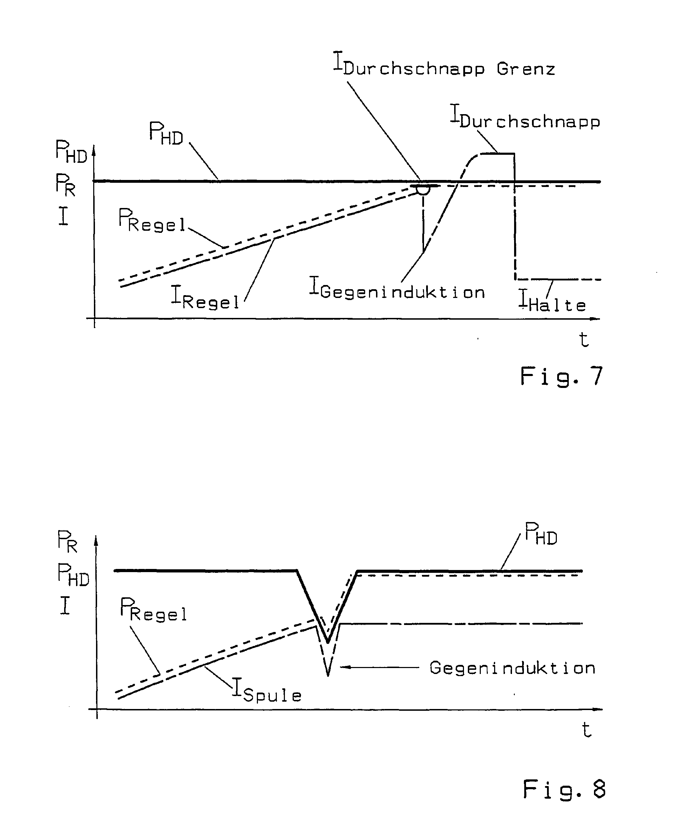

Im Unterschied zu den vorgenannten Figuren beschreiben Fig. 7 und 8 die Signalverläufe beim Durchschalten des Magneten vom Regel- in den Haltebereich.

Der Verlauf des hydraulischen Hauptdrucks P_HD, des Regeldrucks P_Regel sowie des Regelstroms I_Regel ist in Fig. 7 dargestellt. Der hydraulische Hauptdruck P_HD, oder auch Systemdruck genannt, verbleibt üblicherweise auf einem konstanten Wert. Dagegen nimmt der Regeldruck P_Regel mit zunehmendem Regelstrom I_Regel ebenfalls zu, bis der Regeldruck in etwa dem hydraulischen Hauptdruck entspricht. Zu diesem Zeitpunkt wird ein Durchschnapp-Grenzstrom I_Durchschnapp-Grenz erreicht. Der Regelstrom fällt infolge der Gegeninduktion kurzzeitig ab. Der vorgeschlagene Detektor kann anhand dieses Stromeinbruchs den Durchschnapp-Grenzstrom erkennen. Dieser Wert ist als Basis für die Berechnung des Abfangstroms verwendbar. Anschließend wird der Regelstrom bis auf den Durchschnapp-Strom wieder erhöht, wobei der Durchschnapp-Strom oberhalb des Durchschnapp-Grenzstroms liegt. Nach dem Erreichen des Durchschnapp-Stroms wird der Regelstrom wieder stufenförmig reduziert bis auf den Wert eines Haltestroms I_Halte, welcher den Magnetanker eines Proportional-Druckregelventils in seiner Anschlagposition hält.

In einem kritischen Systemzustand (Fig. 8) ist es vorstellbar, daß beispielsweise der hydraulische Hauptdruck P_HD einbricht. Dies ist durch den steilen Abfall und den anschließenden Wiederanstieg des Druckverlaufs gekennzeichnet. Im Moment des Druckeinbruchs entsteht ein Ungleichgewicht zwischen Druckkraft und Magnetkraft und es kann zu einem ungewollten Übergang in die Haltefunktion kommen. Dieses Durchschnappen wird aber ebenfalls vom vorgeschlagenen Detektor erkannt, so daß unmittelbar ein Abfangvorgang eingeleitet werden kann.

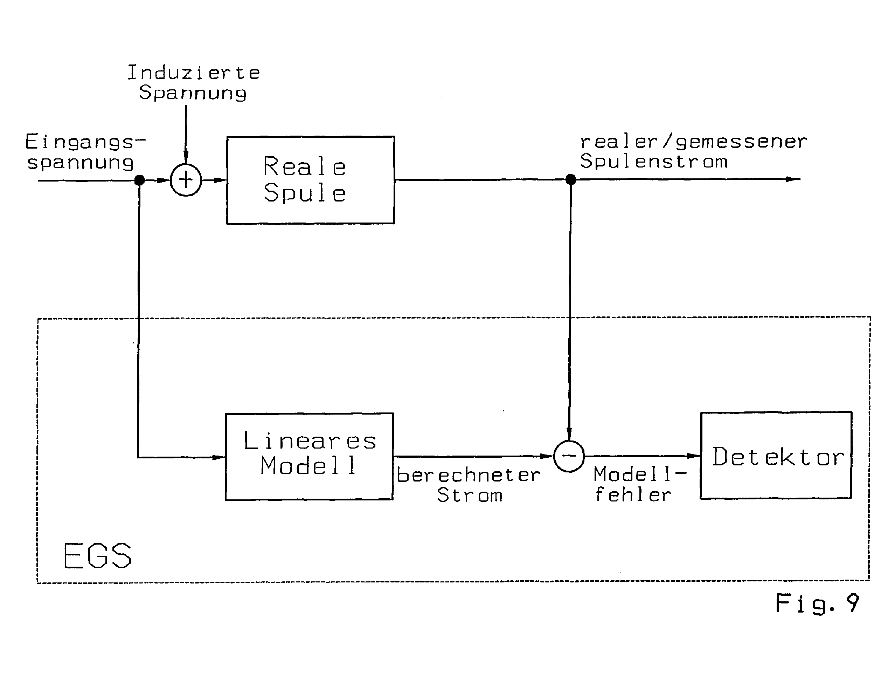

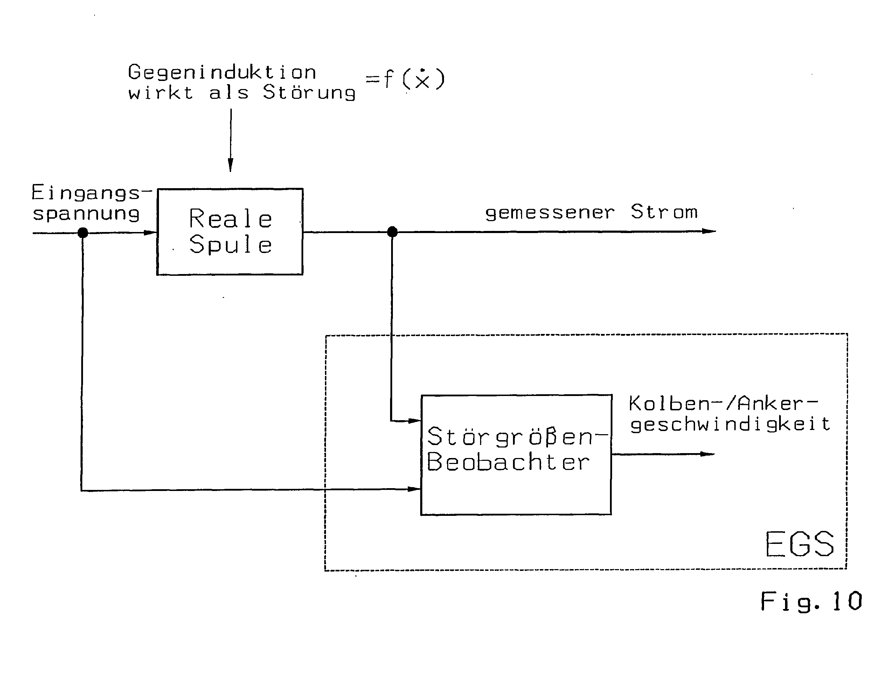

Zur erfindungsgemäßen Detektion der Ankerbewegung im Schaltvorgang sind prinzipiell verschiedene Verfahren denkbar, wobei die Software-Realisierung in einer modellbasierten Detektion mit einem linearen Begleitmodell (Fig. 9) oder in einer beobachterbasierten Detektion der Ankergeschwindigkeit mittels eines Störgrößenbeobachters (Fig. 10) ausführbar ist.

Bei der modellbasierten Detektion (Fig. 9) wird durch eine Eingangsspannung in eine reale Spule ein Spulenstrom erzeugt, wobei die Eingangsspannung von der induzierten Spannung im realen System überlagert ist. Die Auswirkung der Ankergeschwindigkeit auf den Spulenstrom ist dabei durch eine nichtlineare Bewegungsgleichung darstellbar. Ein lineares Begleitmodell berücksichtigt die induzierte Spannung nicht und liefert beim Abschalten der Eingangsspannung, ausgehend vom Maximalstrom, den gleichen Stromverlauf wie die Messung, solange die Ankergeschwindigkeit Null ist. An der Differenz zwischen dem gemessenen und dem in dem linearen Modell simulierten Strom ist die Ankerbewegung, insbesondere das Losreißen des Ankers, detektierbar. Sowohl das lineare Begleitmodell als auch der Detektor sind in der elektronischen Getriebesteuerung EGS zusammengefaßt.

Fig. 10 beschreibt alternativ das Konzept des Störgrößenbeobachters, der aus dem gemessenen Spulenstrom und der Eingangsspannung die Ankergeschwindigkeit schätzt. Die Gegeninduktion wird hierbei als geschwindigkeitsabhängige Störgröße aufgefaßt, wobei diese Abhängigkeit im Beobachter beschrieben ist.

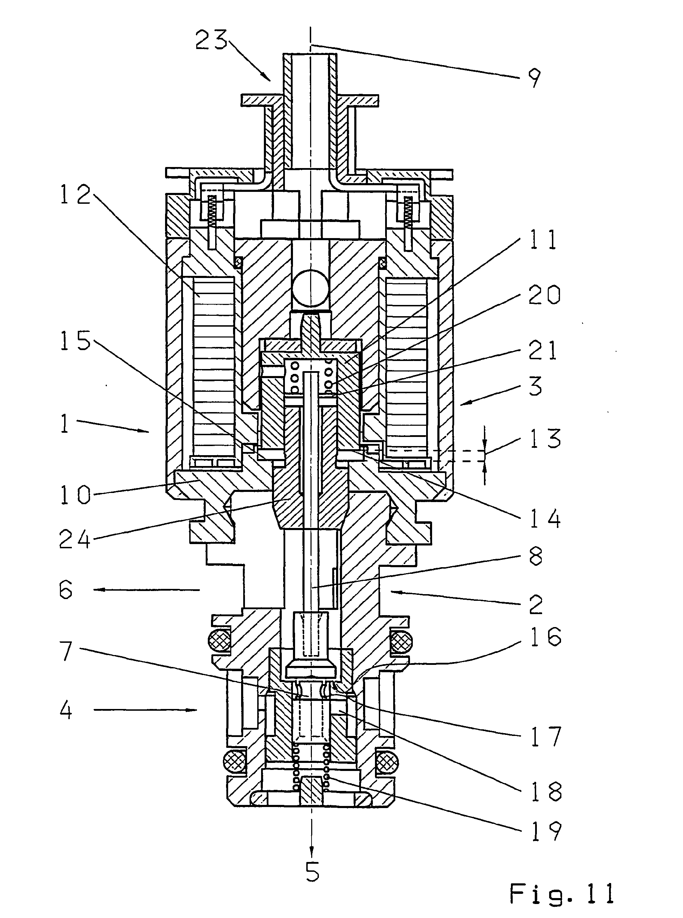

Das Druckregelventil 1 (Fig. 11) besteht im wesentlichen aus einem Ventilgehäuse 2 und einem Proportional-Magnet 3, wobei die Zu- und Ablauföffnungen 4, 5, 6 in dem unteren Teil des Ventilgehäuses 2 angeordnet sind. Ein Steuerelement 7 zum Öffnen und Schließen von Ventilsitz 16 und Schieberkante 17 ist mit einer Ankerstange 8 verbunden, welche eine Ankerachse 9 aufweist und wobei die Ankerstange 8 in einer Buchse 24 geführt ist und das eine Ende der Ankerstange 8 in den Innenraum eines Magnetankers 11 hineinragt. Der Magnetanker 11 bildet zusammen mit einem Magnetkern 10 und einer Magnetspule 12 den Proportional-Magnet 3.

Zur Verbindung des Steuerelements 7 mit dem Proportional-Magnet 3 ist eine Scheibe 21 an dem genannten Ende der Ankerstange 8 befestigt. Dieses Ende der Ankerstange 8 mit der Scheibe 21 ragt in eine im wesentlichen zylindrische Ausnehmung in den Magnetanker 11 hinein. Zwischen der Scheibe 21 und dem Boden der Ausnehmung in dem Anker 11 ist eine schraubenförmige Druckfeder 20 angeordnet. Dadurch wird eine starre Verbindung zwischen der Ankerstange 8 und dem Magnetanker 11 vermieden. In der hier gezeigten Darstellung befindet sich der Magnetanker 11 in einer Endposition, und zwar der "oberen" Anschlagposition, so daß der Abstand 13 zwischen der Stirnseite 14 des Magnetankers 11 und der Stirnseite 15 des Magnetkerns 10 maximal ist. In der ersten Endposition, welche der Halteposition des Magnetankers 11 entspricht, beträgt der Abstand 13 ca. 0 bis 0,3 mm, bevorzugt ca. ≤ 0,1 mm.

Das Steuerelement 7 wird somit von dem Magnetanker 11 über die Druckfeder 20 und die Scheibe 21 einerseits in seine erste "untere" Endposition bewegt. In dieser - nicht gezeigten - Halteposition ist der Flachsitz 16 geschlossen, so daß der an der Zulauföffnung 4 anstehende hydraulische Druck über die drei Bohrungen 18 nicht zu der Ablauföffnung 6 gelangen kann. Ein Öffnen des Flachsitzes 16 wird dadurch erreicht, daß der Steuerstrom der Magnetspule reduziert und dadurch auch die magnetische Haltekraft des Magnetankers 11 so weit zurückgenommen wird, daß der Magnetanker 11 von dem Magnetkern 10 gelöst wird. Anschließend wird der Steuerstrom sofort wieder hochgefahren (Schleifenansteuerung), so daß der "Druckeinbruch" beim Abfallen des Ankers nicht im Feinregulierbereich spürbar wird. Auch kann der Flachsitz 16 dadurch geöffnet werden, indem der hydraulische Hauptdruck innerhalb der Zulauföffnung 4 und des Ringkanals 18 so weit erhöht wird, so daß die hydraulische Kraft auf die "untere" Ringfläche des Flachsitzes 16 größer ist als die magnetische Haltekraft, welche den Anker 11 auf dem Magnetkern 10 festhält.

Das Proportional-Druckregelventil 1 ist beispielsweise mittels eines Koaxialsteckers 23 mit einer nicht gezeigten elektrischen Steuereinrichtung EGS verbunden.

### Bezugszeichen

- 1: Proportional-Druckregelventil
- 2: Ventilgehäuse
- 3: Proportional-Magnet
- 4: Zulauföffnung
- 5: Arbeitsanschluß
- 6: Ablauföffnung
- 7: Steuerelement, Ventilkörper
- 8: Ankerstange
- 9: Ankerachse
- 10: Magnetkern
- 11: Magnetanker
- 12: Magnetspule
- 13: Abstand
- 14: Stirnseite Magnetanker
- 15: Stirnseite Magnetkern
- 16: Flachsitz
- 17: Schieberkante
- 18: Bohrung
- 19: Feder
- 20: Druckfeder
- 21: Scheibe
- 23: Koaxialstecker
- 24: Buchse

- I_Spule: Spulenstrom
- I_min: Mindeststrom
- I_Schwell: Schwellstrom
- I_Abfang: Abfangstrom
- I_Regel: Regelstrom
- I_Durchschnapp_Grenz: Durchschnapp-Grenzstrom
- I_Halte: Haltestrom
- I_Soll: Sollstrom
- U_Spule: Spulenstrom
- P_Regel: Regeldruck
- P_HD: Haltedruck
- t_1: Zeitpunkt
- t_2: Zeitpunkt
- t_3: Zeitpunkt
- t_4: Zeitpunkt
- S: Ankerweg
- EGS: elektronische Getriebesteuerung

## Patentansprüche

1. Verfahren zur Steuerung eines Proportional-Magne-ten (3) mit einem Magnetkern (10), einem Magnetanker (11) und einer Magnetspule (12), wobei der Proportional-Magnet (3) mit einer elektronischen Steuervorrichtung zur Betätigung eines Steuerelements (7) in einem Schaltventil oder einem Proportional-Druckregelventil (1), insbesondere einem Druckregelventil für die Kupplungsbetätigung in einem automatischen Kraftfahrzeug-Getriebe, verbunden ist und der Magnetanker (11) zwischen einem Regelbereich und einem Haltebereich mit einer magnetischen Halteposition des Magnetankers (11) hin- und herbewegt wird ist und ein definierter Übergang vom Regelbereich in die Halteposition ausgeführt wird, **dadurch gekennzeichnet, daß** der Spulenstrom (I_Spule) als direktes Meßsignal in der elektronischen Steuervorrichtung vorliegt, wobei der Zeitpunkt, in dem das Ablösen des Magnetankers (11) von dem Magnetkern (10) stattfindet, durch einen Anstieg des Spulenstroms (I_Spule) von der elektronischen Steuervorrichtung erkannt wird und so die Bewegungen des Magnetankers (11), insbesondere das Lösen aus der Halteposition, detektiert wird und daß nach dem Lösen des Magnetankers (11) von dem Magnetkern (10) eine Korrektur des Spulenstroms (I_Spule) erfolgt und **dadurch** der Magnetanker (11) kontrolliert aus der Halteposition in den Regelbereich überführtt wird.

2. Verfahren nach Anspruch 1, **dadurch gekennzeichnet, daß** man den Magnetanker (11) mittels der elektronischen Steuervorrichtung kontrolliert aus der Halteposition in den Regelbereich überführt.

3. Verfahren nach Anspruch 1, **dadurch gekennzeichnet , daß** Mittel das Durchschalten des Magnetankers (11) vom Regelbereich in die Halteposition erkennen und mittels der elektronischen Steuervorrichtung ein zugehöriger Durchschnapp-Grenzstrom (I_Durchschnapp_Grenz) detektiert und zur Berechnung des Abfangstromes (I_Abfang) verwendet wird.

4. Verfahren nach Anspruch 3, **dadurch gekennzeichnet, daß** die Mittel das unbeabsichtigte Durchschalten vom Regel- in den Haltebereich, beispielsweise bei einem Hauptdruckeinbruch, erkennen.

5. Verfahren nach einem der vorhergehenden Ansprüche, **dadurch gekennzeichnet, daß** man in der elektronischen Getriebesteuerung (EGS) eine Strom-Schwellwert-Vorgabe (I_Schwell) abspeichert und daß man beim Überschreiten dieser Vorgabe den Zeitpunkt des Lösens des Magnetankers (11) feststellt.

6. Verfahren nach einem der vorhergehenden Ansprüche, **dadurch gekennzeichnet, daß** man zur Detektion der Bewegung des Magnetankers (11) eine Hardware- oder eine Software-Realisierung vorsieht.

7. Verfahren nach Anspruch 6, **dadurch gekennzeichnet, daß** man zur Detektion einen ASIC vorsieht.

8. Verfahren nach Anspruch 7, **dadurch gekennzeichnet , daß** einzelne Spitzenwerte des Spulenstroms (I_Spule) detektiert werden und beim Lösen des Magnetankers (11) der Spulenstrom (I_Spule) sofort wieder auf einen Sollwert (I_Soll) angehoben wird, der die Schaltelemente, beispielsweise die Kupplungen in einem Getriebe, auf einem sicheren Schließdruck hält.

9. Verfahren nach Anspruch 7, **dadurch gekennzeichnet, daß** einzelne Spitzenwerte des Spulenstroms (I_Spule) detektiert werden und beim Lösen des Magnetankers (11) ein binäres Signal an die elektronische Getriebesteuerung (EGS) erfolgt, welche danach eine geeignete, beispielsweise adaptive, Vorgabe eines Strom-Soll-werts (I_Soll) vornimmt.

10. Verfahren nach Anspruch 6, **dadurch gekennzeichnet , daß** eine Software-Realisierung mittels einer modellbasierten Detektion erfolgt, wobei durch eine Differenz zwischen dem gemessenen Spulenstrom (I_Spule_gemessen) und einem mittels eines linearen Begleitmodells berechneten, simulierten Strom (I_Spule_berechnet) das Lösen des Magnetankers (11) detektierbar ist.

11. Verfahren nach einem der vorhergehenden Ansprüche, **dadurch gekennzeichnet , daß** eine Detektion der Bewegungen des Magnetankers (11) mittels eines Beobachters erfolgt.

12. Verfahren nach Anspruch 6, **dadurch gekennzeichnet , daß** eine Software-Realisierung mittels einer beobachterbasierten Detektion der Ankergeschwindigkeit erfolgt, wobei der nichtlineare Anteil der Bewegungsgleichung des Spulenstroms (t_Spule nichtlinear) als Störgröße erfaßt und der Zeitpunkt (t_2) des Lösens des Magnetankers (11) erkannt wird.

13. Verfahren nach Anspruch 12, **dadurch gekennzeichnet , daß** die beobachterbasierte Detektion einen Schätzwert der Ankergeschwindigkeit angibt, welche in einem überlagerten Regelkreis mit einer Stellgrößenbeschränkung zum "Abfangen" des Magnetankers (11), insbesondere bei einer Online-Realisierung, nutzbar ist.

14. Verfahren nach einem der Ansprüche 10 bis 13, **dadurch gekennzeichnet, daß** die Software-Realisierung in einem Offline-Verfahren einsetzbar ist.

15. Verfahren nach Anspruch 14, **dadurch gekennzeichnet , daß** die charakteristischen Parameter, wie z. B. das Zeitverhalten des Abschaltvorgangs oder Stromschwellwerte, des Proportional-Magneten (11) am Produktions-Bandende nach Fertigstellung des Magneten einmal ermittelt und in der zugehörigen elektronischen Getriebesteuerung (EGS) eingespeichert werden.

16. Verfahren nach Anspruch 14, **dadurch gekennzeichnet , daß** bei jedem Motorstart eines mit dem Proportional-Magnet (3) ausgestatteten Kraftfahrzeugs der Proportional-Magnet (3) getestet wird, indem die Zeitspanne zwischen einem Spannungssignal und dem Stromanstieg (t_2 -t_1) ausgewertet wird.

17. Proportional-Magnet (3) zur Durchführung eines Verfahrens nach einem der Ansprüche 1 bis 16, mit einem Magnetkern (10), einem Magnetanker (11), einer Magnetspule (12), wobei der Proportional-Magnet (3) mit einer elektronischen Steuervorrichtung (EGS) zur Betätigung eines Steuerelements (7) in einem Schaltventil oder einem Proporfional-Druckregelventil (1), insbesondere einem Druckregelventil für die Kupplungsbetätigung in einem automatischen Kraftfahrzeug-Getriebe, verbunden ist und der Magnetanker (11) zwischen einem Regelbereich und einem Haltebereich mit einer magnetischen Halteposition des Magnetankers (11) hin- und herbewegbar ist und ein definierter Übergang vom Regelbereich in die Halteposition ausführbar ist, **dadurch gekennzeichnet , daß** Mittel vorgesehen sind, welche einen Anstieg des Spulenstroms erkennen und somit die Bewegung des Magnetankers (11), insbesondere das Lösen aus der Halteposition, erkennen und weiterhin Mittel zur Korrektur des Spulenstroms vorgesehen sind, wodurch der Magnetanker (11) kontrolliert aus der Halteposition in den Regelbereich überführbar ist.

18. Proportional-Magnet nach Anspruch 17, **dadurch gekennzeichnet, daß** der Magnetanker (11) mittels der elektronischen Steuervorrichtung kontrolliert aus der Halteposition in den Regelbereich überführbar ist.

19. Proportionel-Magnet nach Anspruch 17 oder 18, **dadurch gekennzeichnet, daß** der Spulenstrom (I_Spule) als direktes Meßsignal in der elektronischen Steuervorrichtung, insbesondere einer Getriebesteuerung (EGS), zur Verfügung steht.

20. Proportional-Magnet nach einem der Ansprüche 17 bis 19, **dadurch gekennzeichnet , daß** ein Beobachter für die Bewegung des Magnetankers (11) vorgesehen ist.

21. Proportional-Magnet nach einem der Ansprüche 17 bis 20, **dadurch gekennzeichnet , daß** der Beobachter und die Auslegung der Abschaltfunktion und der Stromregler sowie konstruktive Parameter als mechatronisches Gesamtsystem aufeinander abgestimmt sind.

22. Proportional-Magnet nach einem der Ansprüche 17 bis 21, **dadurch gekennzeichnet, daß** die Detektion der Bewegung des Magnetankers (11) in Hardware oder in Software realisierbar ist.

23. Proportional-Magnet nach Anspruch 22, **dadurch gekennzeichnet, daß** zur Hardware-Realisierung der Detektion ein ASIC vorgesehen ist.

24. Proportional,Druckregelventil mit einem Proportional-Magnet nach einem der Ansprüche 17 bis 23, **dadurch gekennzeichnet , daß** bei einer Verwendung des aruckregelventits (1) mit einem Sitzventilkörper dieser geometrisch derart ausgelegt ist, daß der sich nach dem Lösen des Magnetankers (11) einstellende hydraulische Druck (P_Regel) größer ist als der Kupplungshaltedruck sowie daß das Druckregelventil (1) mit einem Schieberventilkörper ausgebildet ist und dieser eine derartige geometrische Auslegung der Überdeckungsverhältnisse seiner Steuerkanten aufweist, so daß das Lösen des Magnetankers (11) festgestellt wird und die kontrollierte Führung in den Regelbereich beginnt, bevor die Bewegung des Magnetankers (11) bzw. des Steuerelements (7) eine hydraulische Wirkung erzeugt.

## Claims

1. The invention relates to a method for the control of a proportional magnet (3) with a magnetic core (10), an armature (11) and a magnetic coil (12); with the proportional magnet (3) being connected to an electronic control device for the control of a control element (7) in a shift valve or a proportional pressure-regulating valve (1), in particular a pressure-regulating valve for clutch control in an automatic automotive transmission; and with the armature (11) being moved to and fro between a control range and a holding range with a magnetic holding position of the armature (11); and with a defined transition from the control range to the holding position being performed, **characterized in that** the coil current (I_coil) is available in the electronic control device as a direct measuring signal, with the moment of detachment of the armature (11) from the magnetic core (10) being recognized by the electronic control device due to an increase in the coil current (I_coil), and thus the movements of the armature (11) - in particular its detachment from the holding position - are detected, and that after detachment of the armature (11) from the magnetic core (10), correction of the coil current (I_coil) takes place, as a result of which transition of the armature (11) from the holding position to the control range occurs in a controlled manner.

2. A method according to claim 1, **characterized in that** transition of the armature (11) from the holding position to the control range is performed by the electronic control device in a controlled manner.

3. A method according to claim 1, **characterized in that** means recognize switching of the armature (11) from the control range to the holding position, and that an accompanying switching limiting current (I_switcbing_Iimit) is detected by the electronic control device and used to calculate the intercept current (I_intercept).

4. A method according to claim 3, **characterized in that** the means recognize any unintended switching from the control to the holding range, for example in case of a main-pressure drop.

5. A method according to one of the preceding claims, **characterized in that** a threshold value for the current (I_threshold) is stored in the electronic transmission control (ETC) and that when this value is exceeded, the moment of detachment of the armature (11) is detected.

6. A method according to one of the preceding claims, **characterized in that** either a hardware or a software solution is provided for detection of the movement of the armature (11).

7. A method according to claim 6, **characterized in that** an ASIC is provided for detection.

8. A method according to claim 7, **characterized in that** single peak values of the coil current (I_coil) are detected and that upon detachment of the armature (11), the coil current (I_coil) is immediately increased to a nominal value (I_nominal), which will maintain a safe closing pressure ofthe shifting components, for example the clutches in a transmission.

9. A method according to claim 7, **characterized in that** single peak values ofthe coil current (I_coil) are detected and that upon detachment of the armature (11), a binary signal is sent to the electronic transmission control (ETC), which will then provide a suitable, for example adaptive, value for the nominal current (I_nominal).

10. A method according to claim 6, **characterized in that** a software solution by means of model-based detection is realized, according to which detachment of the armature (11) can be detected on the basis of the difference between the measured coil current (I_coil_measured) and a simulated current (I_coil_calculated) calculated by means of a linear model.

11. A method according to one of the preceding claims, **characterized in that** detection ofthe movements of the armature (11) is performed by means of an observer.

12. A method according to claim 6, **characterized in that** a software solution is realized by means of observer-based detection of the armature speed, with the nonlinear share of the motion equation of the coil current (I_coil_nonlinear) being registered as disturbance variable and the moment (t_2) of detachment of the armature (11) being recognized.

13. A method according to claim 12, **characterized in that** observer-based detection provides an estimated value of the armature speed, which can be used in a superimposed control loop with control-variable limitation for "interception" of the armature (11), especially in case of an online solution

14. A method according to one of the claims 10 through 13, **characterized in that** the software solution can be used in an offline procedure.

15. A method according to claim 14, **characterized in that** the characteristic parameters of the proportional magnet (11), such as the time response ofthe switching-off process or current threshold values, are determined at the end of the production line after completion of the magnet and stored in the electronic transmission control (ETC).

16. A method according to claim 14, **characterized in that** every time the engine of a vehicle equipped with a proportional magnet (3) is started, the proportional magnet (3) is tested by the time interval between a voltage signal and the increase in current (t_2-t_1) being evaluated.

17. A proportional magnet (3) with a magnetic core (10), an armature (11) and a magnetic coil (12) for realization of a method according to one of the claims 1 through 16, with the proportional magnet (3) being connected to an electronic control unit (ETC) for the control of a control element (7) in a shift valve or a proportional pressure-regulating valve (1), especially a pressure-regulating valve for clutch control in an automatic automotive transmission, and with the armature (11) being shiftable back and forth between a control range and a holding range with a magnetic holding position of the armature (11), and with a defined transition from the control range to the holding position being possible, **characterized in that** means are provided which recognize any increase in the coil current and thus detect the movement of the armature (11), especially its detachment from the holding position, and that further means are provided for the correction of the coil current, as a result of which controlled transition ofthe armature (11) from the holding position to the control range is possible.

18. A proportional magnet according to claim 17, **characterized in that** controlled transition of the armature (11) from the holding position to the control range can be realized by means of the electronic control device.

19. A proportional magnet according to claim 17 or 18, **characterized in that** the coil current (I_coil) is available as a direct measuring signal in the electronic control unit, in particular an electronic transmission control unit (ETC).

20. A proportional magnet according to one of the claims 17 through 19, **characterized in that** an observer is provided for the movement of the armature (11).

21. A proportional magnet according to one of the claims 17 through 20, **characterized in that** the observer, the configuration of the switching-off function, the current regulator as well as the design parameters are harmonized to form an overall mechatronic system.

22. A proportional magnet according to one of the claims 17 through 21, **characterized in that** detection of the movement of the armature (11) can be realized by means of a hardware or a software solution.

23. A proportional magnet according to claim 22, **characterized in that** an ASIC is provided for the hardware solution for detection

24. A proportional pressure-regulating valve with a proportional magnet according to one of the claims 17 through 23, **characterized in that** if a pressure-regulating valve (1) with a seat valve is used, the geometric design of the valve will be such that the hydraulic pressure (P_regul) after detachment of the armature (11) exceeds the dutch-holding pressure, and **characterized** also **in that** the pressure-regulating valve (1) features a slide valve, the geometric design of the overlapping ratios of its control edges is such that detachment of the armature (11) is detected and controlled transition to the control range starts before the movement of the armature (11) or the control element (7) produces any hydraulic effect.

## Revendications

1. Procédé pour commander un électro-aimant proportionnel (3) comportant un noyau magnétique (10), une armature magnétique (11) et une bobine magnétique (12), dans lequel l'électro-aimant proportionnel (3) est relié à un dispositif de commande électronique destiné à actionner un élément de commande (7) dans une vanne de passage ou dans une vanne de régulation de pression proportionnelle (1), en particulier dans une vanne de régulation de pression prévue pour l'actionnement d'un embrayage dans une transmission automatique de véhicule automobile, et dans lequel l'armature magnétique (11) se déplace en va-et-vient entre une région de régulation et une région de maintien qui comprend une position de maintien magnétique de l'armature magnétique (11), et le passage entre la région de régulation et la position de maintien se produit d'une façon définie, **caractérisé en ce que** le courant de bobine (I_Spule) est présent en tant que signal de mesure direct dans le dispositif de commande électronique, l'instant où a lieu la séparation de l'armature magnétique (11) par rapport au noyau magnétique (10) étant détecté par le dispositif de commande électronique par une élévation du courant de bobine (I_Spule) et les mouvements de l'armature magnétique (11), en particulier l'abandon de la position de maintien, étant ainsi détectés, et **en ce que**, après la séparation de l'armature magnétique (11) par rapport au noyau magnétique (10), il se produit une correction du courant de bobine (I_Spule) et que, sous cet effet, l'armature magnétique (11) passe de la position de maintien à la région de régulation de façon contrôlée.

2. Procédé selon la revendication 1, **caractérisé en ce qu'**on fait passer l'armature magnétique (11) de la position de maintien à la région de régulation de façon contrôlée au moyen du dispositif de commande électronique.

3. Procédé selon la revendication 1, **caractérisé en ce que** des moyens détectent le passage de l'armature magnétique (11) de la région de régulation à la position de maintien et un courant limite d'encliquetage (I_Durchschnapp_Grenz) correspondant est détecté au moyen du dispositif de commande électronique et utilisé pour le calcul du courant de retenue (I_Abfang).

4. Procédé selon la revendication 3, **caractérisé en ce que** les moyens détectent le passage accidentel de la région de régulation à la région de maintien, par exemple, dans le cas d'un effondrement de la pression principale.

5. Procédé selon l'une des revendications précédentes, **caractérisé en ce que** l'on mémorise dans la commande électronique de la transmission (EGS) une sélection de valeur de seuil de courant (I_Schwell)34 et **en ce qu'**on reconnaît l'instant de la séparation de l'armature magnétique (11) lors du dépassement de cette sélection.

6. Procédé selon l'une des revendications précédentes, **caractérisé en ce que**, pour la détection du mouvement de l'armature magnétique (11), on prévoit une réalisation matérielle ou une réalisation logicielle.

7. Procédé selon la revendication 6, **caractérisé en ce que**, pour la détection, on prévoit un ASIC.

8. Procédé selon la revendication 7, **caractérisé en ce que** des valeurs de pointe du courant de bobine (I_Spule) sont détectées et, lors de la séparation de l'armature magnétique (11), le courant de bobine (I_Spule) est aussitôt relevé à une valeur de consigne (I_Soll) qui maintient les éléments de commande, par exemple les embrayages, à une pression de fermeture de sécurité.

9. Procédé selon la revendication 7, **caractérisé en ce que** des valeurs de pointe du courant de bobine (I_Spule) sont détectées et, lors de la séparation de l'armature magnétique (11), un signal binaire est appliqué à la commande électronique de la transmission (EGS), laquelle procède ensuite à une sélection appropriée, par exemple adaptative, d'une valeur de consigne du courant (I_Soll).

10. Procédé selon la revendication 6, **caractérisé en ce qu'**une réalisation logicielle s'effectue au moyen d'une détection basée sur un modèle, la séparation de l'armature magnétique (11) pouvant être détectée par une différence entre le courant de bobine mesuré (I_Spule_gemessen) et un courant simulé, calculé au moyen d'un modèle accompagnant linéaire.

11. Procédé selon l'une des revendications précédentes, **caractérisé en ce qu'**une détection des mouvements de l'armature magnétique (11) s'effectue au moyen d'un observateur.

12. Procédé selon la revendication 6, **caractérisé en ce qu'**une réalisation matérielle est réalisée au moyen d'une détection basée sur l'observateur de la vitesse de l'armature magnétique, la partie non linéaire de l'équation du mouvement du courant de bobine (I_Spule_nichtlinear) étant captée en tant que grandeur perturbatrice et l'instant (t_2) de la séparation de l'armature magnétique (11) étant détecté.

13. Procédé selon la revendication 12, **caractérisé en ce que** la détection basée sur l'observateur donne une valeur estimée de la vitesse de l'armature qui peut être utilisée dans un circuit de régulation superposé comprenant une limitation de la grandeur réglante pour la "retenue" de l'armature magnétique (11), en particulier dans le cas d'une réalisation en ligne.

14. Procédé selon l'une des revendications 10 à 13, **caractérisé en ce que** la réalisation logicielle peut être utilisée dans un procédé hors ligne.

15. Procédé selon la revendication 14, **caractérisé en ce que** les paramètres caractéristiques de l'électro-aimant proportionnel (3) comme, par exemple, le comportement dans le temps du processus de déconnexion ou encore des valeurs de seuil de courant, sont déterminés une fois pour toutes en bout de la chaîne de production après l'achèvement de l'électro-aimant et enregistrés dans la commande de transmission électronique (EGS).

16. Procédé selon la revendication 14, **caractérisé en ce qu'**à chaque démarrage du moteur d'un véhicule équipé de l'électro-aimant proportionnel (3), l'électro-aimant proportionnel (3) est soumis à un test en ce sens que le laps de temps entre un signal de tension et l'élévation du courant (t_2 - t_1) est évalué.

17. Electro-aimant proportionnel (3) pour la mise en oeuvre d'un procédé selon l'une des revendications 1 à 16, comportant un noyau magnétique (10), une armature magnétique (11), une bobine magnétique (12), dans lequel l'électro-aimant proportionnel (3) est relié à un dispositif de commande électronique (EGS) destiné à actionner un élément de commande (7) dans une vanne de passage ou dans une vanne de régulation de pression proportionnelle (1), en particulier dans une vanne de régulation de pression prévue pour l'actionnement d'un embrayage dans une transmission automatique de véhicule automobile, et dans lequel l'armature magnétique (11) peut se déplacer en va-et-vient entre une région de régulation et une région de maintien qui comprend une position de maintien magnétique de l'armature magnétique (11), et le passage de la région de régulation à la position de maintien se produit d'une façon définie, **caractérisé en ce qu'**il est prévu des moyens qui détectent une élévation du courant de la bobine et détectent ainsi le mouvement de l'armature magnétique (11), en particulier l'abandon de la position de maintien, et **en ce qu'**il est prévu en outre des moyens pour la correction du courant de bobine, sous l'effet de laquelle l'armature magnétique (11) peut être transférée de la position de maintien à la région de régulation de façon contrôlée.

18. Electro-aimant proportionnel selon la revendication 17, **caractérisé en ce que** l'armature magnétique (11) peut être transférée de la position de maintien à la région de régulation de façon contrôlée au moyen de la commande électronique.

19. Electro-aimant proportionnel selon la revendication 17 ou 18, **caractérisé en ce que** le courant de bobine (I_Spule) est à disposition en qualité de signal de mesure direct dans le dispositif de commande électronique, en particulier dans une commande de transmission (EGS).

20. Electro-aimant proportionnel selon l'une des revendications 17 à 19, **caractérisé en ce qu'**un observateur est prévu pour le mouvement de l'armature magnétique (11).

21. Electro-aimant proportionnel selon l'une des revendications 17 à 20, **caractérisé en ce que** l'observateur et la conception de la fonction de déconnexion, le régulateur de courant ainsi que les paramètres de construction sont adaptés les uns aux autres former un système global mécatronique.

22. Electro-aimant proportionnel selon l'une des revendications 17 à 21, **caractérisé en ce que** la détection du mouvement de l'armature magnétique (11) peut être réalisée sous une forme matérielle ou logicielle.

23. Electro-aimant proportionnel selon la revendication 22, **caractérisé en ce qu'**il est prévu un ASIC pour la réalisation de la détection sous forme matérielle.

24. Vanne de régulation de pression proportionnelle comprenant un électro-aimant proportionnel selon l'une des revendications 17 à 23, **caractérisée en ce que**, dans le cas de l'utilisation d'une vanne de régulation de pression (1) comportant un corps de vanne à siège, ce dernier est conçu géométriquement de telle manière que la pression hydraulique (P_Regel), qui s'établit après la séparation de l'armature magnétique (11), est plus grande que la pression de maintien de l'embrayage, ainsi qu'en ce que la vanne de régulation de pression (1) est réalisée avec un corps de vanne à tiroir et ce corps présente une conception géométrique des conditions de recouvrement de ses arêtes de commande qui est telle que la séparation de l'armature magnétique (11) soit constatée et que le passage contrôlé à la région de régulation commence avant que le mouvement de l'armature magnétique (11) ou de l'élément de commande (7) ne produise un effet hydraulique.
